# EUROPÄISCHE PATENTANMELDUNG

(11) **EP 4 375 174 A1**
(43) Veröffentlichungstag der Anmeldung: **29.05.2024**
(21) Anmeldenummer: 23211721.8
(22) Anmeldetag: 23.11.2023
(51) Int. Cl.: B62H 1/04, B62K 7/02, B62K 19/40

(54) **STÄNDERVORRICHTUNG FÜR EIN FAHRRAD UND EIN FAHRRAD**

(30) Priorität: 23.11.2022 DE 202022106568 U
(71) Anmelder: RTI Sports GmbH, 56070 Koblenz (DE)
(72) Erfinder: Graeve, Arndt, 56072 Koblenz (DE); Delauney, Sebastian, 56075 Koblenz (DE)
(74) Vertreter: dompatent von Kreisler Selting Werner - Partnerschaft von Patent- und Rechtsanwälten mbB

(57) **Zusammenfassung**

Ständervorrichtung (10) für ein Fahrrad (100), mit einem Fahrradrahmenelement (12), und einer an dem Fahrradrahmenelement (12) angeordneten Verbindungsvorrichtung (16) zur Verbindung mit einem Fahrradständer (14), wobei die Verbindungsvorrichtung (16) in das Fahrradrahmenelement (12) eingelassen ist. Ferner ein Fahrrad (100) mit einer solchen Ständervorrichtung (10).

## Beschreibung

Die Erfindung betrifft eine Ständervorrichtung für ein Fahrrad. Ferner betrifft die Erfindung ein Fahrrad.

An Fahrrädern sind diverse Fahrradständer zum Abstellen des Fahrrads bekannt. Häufig kommen klappbare Kickstands mit einem oder mehreren Beinen zum Einsatz, die an einer Kettenstrebe oder zwischen den beiden Kettenstreben nahe des Tretlagers montiert sind.

Lastenräder, bspw. Long John Lastenräder weisen meist zweibeinige Kickstands auf. Diese zweibeinige Kickstands sind meist unter der Ladefläche des Lastenrads angeordnet, z. B. mit einem oder zwei Unterrohren und/oder mit der Ladevorrichtung verbunden.

Bekannte Fahrradständer, insbesondere Fahrradständer für Lastenräder, weisen Nachteile auf.

Bspw. sind Fahrradständer häufig schlecht zu erreichen, insbesondere von einer Abstiegsposition des Fahrrads.

Ferner stehen Fahrradständer, insbesondere über die Außenmaße des Fahrradrahmens und/oder des Fahrrads an sich, über. So ergeben sich durch Fahrradständer bspw. ein größeres Volumen des Fahrrads, ein schlechterer Gesamteindruck, insbesondere Design des Fahrrads, Verletzungs- bzw. Beschädigungsrisiken, und/oder ein schlechterer Luftwiderstand.

Weitergehend besteht die Möglichkeit, dass Fahrradständer im Weg sind, bspw. die Tretkurbel, die Pedale, die Füße eines Fahrers und/oder das Vorderrad behindern.

Darüber hinaus ergeben sich Probleme bei der Befestigung und/oder Verbindung der Fahrradständer mit dem Fahrrad, sodass es z. B. zu einem Verrutschen, Verdrehen, Loslösen, Beschädigen, Abbrechen und/oder Ausreißen des Fahrradständers kommen kann.

Aufgabe der Erfindung ist es, eine Ständervorrichtung für ein Fahrrad und ein Fahrrad zu schaffen, wobei die Verbindung des Fahrradständers mit dem Fahrrad verbessert ist.

Die Lösung der Aufgaben erfolgt erfindungsgemäß durch eine Ständervorrichtung für ein Fahrrad gemäß Anspruch 1 und ein Fahrrad gemäß Anspruch 11.

Bei der erfindungsgemäßen Ständervorrichtung für ein Fahrrad handelt es sich insbesondere um eine Ständervorrichtung für ein, vorzugsweise motorisiertes, Lastenrad. Die Ständervorrichtung weist ein Fahrradrahmenelement auf. Ferner weist die Ständervorrichtung eine an dem Fahrradrahmenelement angeordnete Verbindungsvorrichtung zur Verbindung mit einem Fahrradständer, bevorzugt einem Kickstand, besonders bevorzugt einem zweibeinigen Kickstand, auf. Die Verbindungsvorrichtung ist vorzugsweise integral, auch als einstückig zu bezeichnen, mit dem Fahrradrahmenelement ausgeführt. Vorzugsweise ist die Verbindungsvorrichtung gemeinsam mit dem Fahrradrahmenelement hergestellt, insbesondere mittels Urformen, bspw. Gießen; und/oder Umformen, bspw. Pressen, Ziehen und/oder Walzen; und/oder Trennen, bspw. Fräsen, Bohren, Sägen und/oder Drehen; und/oder mittels Fügens, bspw. Schweißen und/oder Löten. Die Verbindungsvorrichtung ist, zumindest teilweise, in das Fahrradrahmenelement eingelassen. Eingelassen meint insbesondere, dass die Verbindungsvorrichtung, zumindest teilweise, in das Fahrradrahmenelement integriert oder darin versenkt ist. Vorzugsweise ist die Verbindungsvorrichtung derart ausgeführt, insbesondere in das Fahrradrahmenelement eingelassen, dass ein mit der Verbindungsvorrichtung zu verbindender Fahrradständer in das Fahrradrahmenelement und somit insbesondere in den Fahrradrahmen, eingelassen anzuordnen ist, wodurch es bevorzugt zu einem Versenken und/oder Integration des Fahrradständers kommt. Durch diese eingelassene Anordnung des Fahrradständers sind insbesondere vorteilhaft verringerte Au-ßenmaße, eine größere Bodenfreiheit, ein verbesserter Luftwiderstand und/oder eine verbesserte Befestigung umsetzbar. Die Verbindungsvorrichtung ist insbesondere in einem Unterbodenbereich des Fahrrads angeordnet und/oder in einen Unterbodenbereich des Fahrrads eingelassen.

In bevorzugter Ausführung weist das Fahrradrahmenelement eine Öffnung, insbesondere eine Tasche, zur zumindest teilweisen, Ausbildung der Verbindungsvorrichtung auf. Insbesondere besteht die Verbindungsvorrichtung somit, zumindest teilweise, aus der Öffnung im Fahrradrahmenelement. Insbesondere ist die Öffnung zumindest 5 mm, bevorzugt zumindest 10 mm, besonders bevorzugt zumindest 20 mm tief ausgeführt, erstreckt sich somit vorzugsweise derart tief in das Fahrradrahmenelement. Es ist bevorzugt, dass die Öffnung zu einer versenkten Aufnahme des Fahrradständers von zumindest 5 mm, bevorzugt zumindest 10 mm, besonders bevorzugt zumindest 20 mm innerhalb des Fahrradrahmenelements ausgeführt ist. Insbesondere erstreckt sich die Öffnung zumindest 20 %, bevorzugt zumindest 40 %, besonders bevorzugt zumindest 60 % tief in die Erstreckung, vorzugsweise die Dicke, des Fahrradrahmenelements. Diese Erstreckung, insbesondere Dicke, betrifft vorzugsweise eine Erstreckung des Fahrradrahmenelements entlang der Erstreckung der Öffnung. Vorzugsweise erstreckt sich die Öffnung mindestens durch die Hälfte des Fahrradrahmenelements. Die Erstreckung, vorzugsweise die Dicke, des Fahrradrahmenelements beträgt insbesondere zumindest 15 mm, bevorzugt zumindest 25 mm, besonders bevorzugt zumindest 30 mm. In einer bevorzugten Ausführung beträgt die Tiefe der Öffnung ca. 23 mm bei einer Erstreckung, vorzugsweise die Dicke, des Fahrradrahmenelements von ca. 35 mm. Es ist bevorzugt, dass die Öffnung zu einer versenkten Aufnahme des Fahrradständers von zumindest 10 %, bevorzugt zumindest 20 %, besonders bevorzugt zumindest 35 % in die Erstreckung, vorzugsweise die Dicke, des Fahrradrahmenelements ausgeführt ist.

In bevorzugter Ausführung ist die Öffnung, in Bezug auf das Fahrrad, nach unten und/oder seitlich und/oder in Längsrichtung offen ausgeführt. In Längsrichtung offen meint insbesondere eine offene Ausführung nach vorne und/oder hinten. Seitlich offen meint insbesondere eine offene Ausführung zur rechten und/oder linken Seite in Bezug auf die Fahrtrichtung des Fahrrads. Andererseits ist es bevorzugt möglich, dass ein durch die Öffnung ausgebildeter Raum nach oben hin, seitlich und/oder nach vorne, zumindest teilweise, geschlossen ausgeführt ist. Besonders bevorzugt ist die Öffnung, in Bezug auf das Fahrrad, insbesondere ausschließlich, nach unten und/oder nach hinten offen ausgeführt.

In bevorzugter Ausführung ist die Verbindungsvorrichtung zur form- und/oder kraftschlüssigen Verbindung mit dem Fahrradständer ausgeführt. Bevorzugt ist zumindest die Öffnung zur form- und/oder kraftschlüssigen Verbindung mit dem Fahrradständer ausgeführt. Formschlüssig meint hierbei insbesondere, dass eine einschiebende und/oder versenkte Aufnahme des Fahrradständers in der Öffnung umsetzbar ist.

In bevorzugter Ausführung weist die Ständervorrichtung mindestens eine Bohrung in dem Fahrradrahmenelement, insbesondere durch das Fahrradrahmenelement, zur schraubenden Verbindung des Fahrradständers am Fahrradrahmenelement auf. Die mindestens eine Bohrung mündet vorzugsweise in die Öffnung. Bevorzug weist die Ständervorrichtung zwei, insbesondere exakt zwei Bohrungen auf. Die Bohrung ist insbesondere zu Durchführung eines Bolzens oder einer Schraube zur Befestigung des Fahrradständers am Fahrradrahmenelement, insbesondere in der Öffnung, ausgeführt. Bevorzugt ist die Bohrung, in Bezug auf das Fahrrad, in einer Höhenrichtung, also insbesondere von oben nach unten verlaufend, ausgeführt.

In bevorzugter Ausführung handelt es sich bei dem Fahrradrahmenelement um ein Rahmenrohr. Bevorzugt handelt es sich um ein Teil des Unterrohrs des Fahrrads, bevorzugt um das Unterrohr an sich. Durch die bevorzugte Anordnung der Verbindungsvorrichtung, ist ein Anordnung des Fahrradständers an einer sehr steifen Struktur möglich oder umgesetzt, sodass die Standkräfte optimal einzuleiten sind.

In bevorzugter Ausführung weist das Fahrradrahmenelement eine Motoraufnahme zur, insbesondere zumindest formschlüssigen, Aufnahme eines, vorzugsweise elektrischen, Motors auf. Bei dem Fahrradrahmenelement handelt es sich insbesondere um ein Motorbracket zur Aufnahme des Motors. Das Motorbracket ist insbesondere Teil des Unterrohrs. Vorzugsweise weist das Unterrohr das Motorbracket auf, ist vorzugsweise einstückig damit ausgeführt.

In bevorzugter Ausführung ist mit der Motoraufnahme ein, insbesondere elektrischer, Motor verbunden.

In bevorzugter Ausführung weist die Ständervorrichtung einen mit der Verbindungsvorrichtung, insbesondere unmittelbar, verbundenen Fahrradständer auf. Der Fahrradständer ist vorzugsweise in der Öffnung angeordnet, insbesondere darin versenkt. Es ist bevorzugt, dass der Fahrradständer zumindest zu 5 mm, bevorzugt zumindest zu 10 mm, besonders bevorzugt zumindest zu 20 mm innerhalb des Fahrradrahmenelements versenkt ist. Es ist bevorzugt, dass der Fahrradständer zumindest zu 10 %, bevorzugt zumindest zu 20 %, besonders bevorzugt zumindest zu 35 % in die Erstreckung, vorzugsweise die Dicke, des Fahrradrahmenelements versenkt ist.

In bevorzugter Ausführung handelt es sich bei dem Fahrradständer um einen, insbesondere zweibeinigen, Kickstand.

Bei dem erfindungsgemäßen Fahrrad handelt es sich insbesondere um ein Lastenrad. Bei dem Fahrrad, insbesondere Lastenrad, handelt es sich vorzugsweise um ein einspuriges und/oder zweirädriges Fahrrad. Das Fahrrad weist eine Ständervorrichtung mit einem oder mehreren Merkmalen der erfindungsgemäßen Ständervorrichtung auf.

In bevorzugter Ausführung ist die Verbindungsvorrichtung, und insbesondere der Fahrradständer, in Längsrichtung des Fahrrads vor einer Kurbelachse und/oder vor dem Motor angeordnet. Die Verbindungsvorrichtung, und insbesondere der Fahrradständer, ist vorzugsweise in Fahrrichtung des Fahrrads in einem Bereich zwischen 40 % bis 60 % der Länge des Fahrrads angeordnet. Die Verbindungsvorrichtung ist insbesondere in einem Unterbodenbereich des Fahrrads angeordnet und/oder in einen Unterbodenbereich des Fahrrads eingelassen.

In bevorzugter Ausführung ist die Verbindungsvorrichtung, und insbesondere der Fahrradständer, in Längsrichtung des Fahrrads hinter einem Lenker, vorzugsweise einem Lenkerrohr und/oder einem Steuerrohr, des Fahrrads angeordnet. Bevorzugt ist die Verbindungsvorrichtung, und insbesondere der Fahrradständer, in Längsrichtung des Fahrrads zwischen dem Lenkerrohr und/oder dem Steuerrohr sowie einem Sattelrohr angeordnet.

In bevorzugter Ausführung ist die Verbindungsvorrichtung, und insbesondere der Fahrradständer, zumindest teilweise unterhalb eines Lastenaufnahmebereichs, insbesondere einem innerhalb des Fahrradrahmens angeordneten Lastenaufnahmebereichs angeordnet. Der Lastenaufnahmebereich ist vorzugsweise zwischen einem Oberrohr und einem Unterrohr des Fahrrads angeordnet.

In bevorzugter Ausführung ist die Verbindungsvorrichtung, und insbesondere der Fahrradständer, in Längsrichtung des Fahrrads zwischen einem Gepäckträger über ein Hinterrad des Fahrrads und einem Gepäckträger über dem Oberrohr des Fahrrads angeordnet. Bevorzugt ist die Verbindungsvorrichtung, und insbesondere der Fahrradständer, nicht in einem Bereich unterhalb eines dieser Gepäckträger oder beider dieser Gepäckträger angeordnet.

Es ist bevorzugt, dass die Verbindungsvorrichtung, und insbesondere der Fahrradständer, in Längsrichtung und/oder in Querrichtung des Fahrrads im Bereich des Schwerpunkts des Fahrrads angeordnet ist. Im Bereich des Schwerpunkts meint hierbei insbesondere eine Anordnung um max. 30%, bevorzugt max. 10 %, der Länge des Fahrrads in Längsrichtung versetzt zum Schwerpunkt. Der Schwerpunkt des Fahrrads bezieht sich hierbei insbesondere auf einen unbeladenen Zustand und/oder einen beladenen Zustand des Fahrrads. Es ist bevorzugt, dass die Verbindungsvorrichtung, und insbesondere der Fahrradständer, in Längsrichtung und/oder in Querrichtung des Fahrrads im Bereich einer maximalen Beladungsstelle des Fahrrads angeordnet ist.

Bevorzugt ist die Verbindungsvorrichtung, und insbesondere der Fahrradständer, in Querrichtung des Fahrrads mittig, besonders bevorzugt exakt in der Mitte, angeordnet.

Nachfolgend wird die Erfindung anhand bevorzugter Ausführungsformen unter Bezugnahme auf die anliegenden Zeichnungen näher erläutert.

Es zeigen:
- Fig. 1: eine perspektivische Darstellung einer Ausführungsform eines erfindungsgemäßen Fahrrads mit einer Ausführungsform einer erfindungsgemäßen Ständervorrichtung,
- Fig. 2: eine Detailansicht auf die Ständervorrichtung aus Fig. 1, und
- Fign. 3-8: verschiedene Darstellungen bzw. Ansichten von Ständervorrichtungen basierend auf der Ständervorrichtung aus Fig. 2.

Ähnliche oder identische Bauteile oder Elemente werden in den Figuren mit den gleichen Bezugszeichen identifiziert. Insbesondere zur verbesserten Übersichtlichkeit werden, vorzugsweise bereits identifizierte Elemente nicht in allen Figuren mit Bezugszeichen versehen.

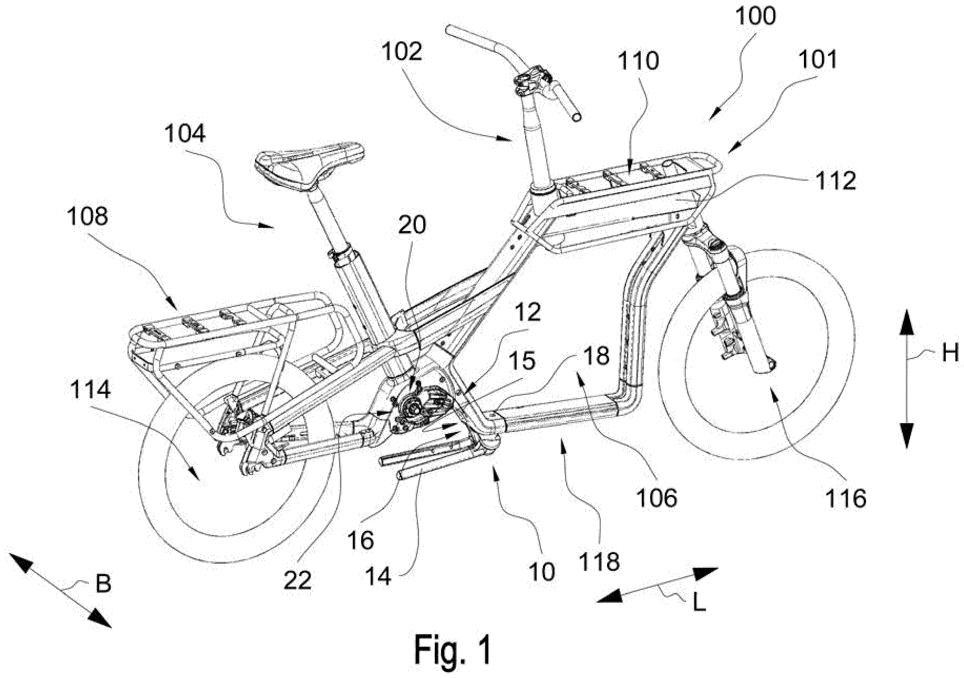

Figur 1 zeigt eine Ausführung eines erfindungsgemäßen Fahrrads 100, wobei es sich um ein Lastenrad mit einem zwischen dem Oberrohr 112 und dem Unterrohr 118 angeordneten Ladebereich 106 handelt. Das Fahrrad 100 ist zweirädrig, mit Vorderrad 116 und Hinterrad 114, sowie mittels elektrischem Motor 20 motorisiert ausgeführt.

Der Motor 20 ist in einem als Motorbracket 12 ausgeführtem Fahrradrahmenelement 12 des Fahrradrahmens 101 aufgenommen.

In einem Bereich 13 des Motorbrackets 12, der insbesondere Teil des Unterohrs 118 ist und/oder in das Unterrohr 118 übergeht, ist integral mit dem Motorbracket 12 eine Verbindungsvorrichtung 16 zur Verbindung mit einem Fahrradständer 14 angeordnet. Die Verbindungsvorrichtung 16 ist insbesondere in einem Unterbodenbereich des Fahrrads 100 angeordnet und/oder in einen Unterbodenbereich des Fahrrads 100 eingelassen.

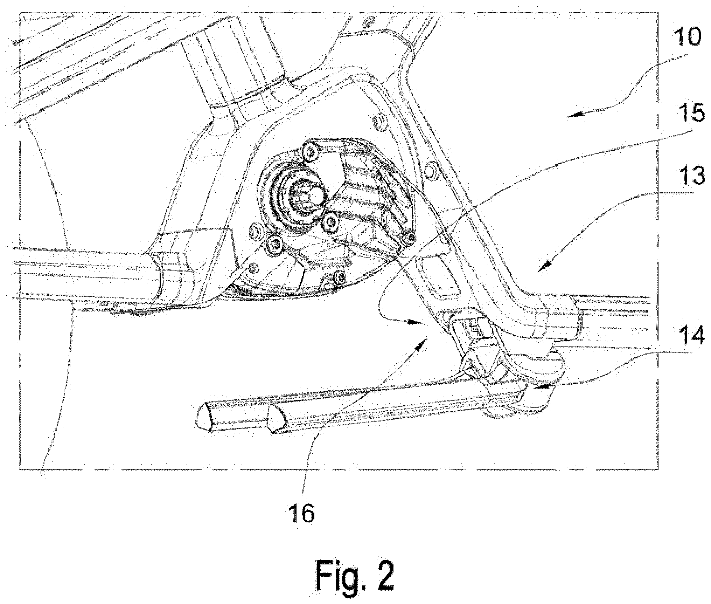

Das Motorbracket 12 weist zur Ausbildung der Verbindungsvorrichtung 16 eine Öffnung 15 auf (vgl. Fig. 2). Insbesondere ist die Öffnung 15 Teil der Verbindungsvorrichtung 16, oder die Verbindungsvorrichtung 16 besteht aus der Öffnung 15.

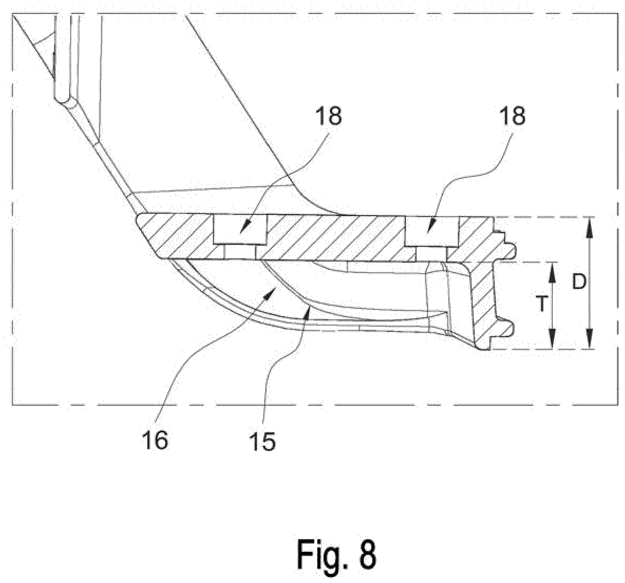

Die Öffnung 15 weist eine Tiefe T in die Erstreckung D, insbesondere Dicke, des Motorbrackets 12, vorzugsweise im Bereich 13, auf (vgl. Fig. 8).

Insbesondere weist die Öffnung 15 eine Tiefe T von zumindest 5 mm, bevorzugt zumindest 10 mm, besonders bevorzugt zumindest 20 mm auf (vgl. Fig. 8). Alternativ oder zusätzlich erstreckt sich die Öffnung zumindest 20 %, bevorzugt zumindest 40 %, besonders bevorzugt zumindest 60 % tief in die Erstreckung D des Motorbrackets 12. Die Erstreckung D, vorzugsweise die Dicke des Motorbrackets 12 beträgt insbesondere zumindest 15 mm, bevorzugt zumindest 25 mm, besonders bevorzugt zumindest 30 mm. Vorzugsweise ist die Öffnung 15 somit zu einer entsprechend versenkten Aufnahme des Fahrradständer 14 ausgeführt und/oder der Fahrradständer 14 entsprechend tief versenkt. In bevorzugter Ausführung beträgt die Tiefe T der Öffnung 15 ca. 23 mm bei einer Erstreckung D, vorzugsweise die Dicke des Motorbrackets 12 von ca. 35 mm, wobei sich die Öffnung 15 ca. 66 % tief in das Motorbracket 12 erstreckt.

Die Öffnung 15 ist nach unten, insbesondere gemäß einer Höhenrichtung H (vgl. Fig. 1) des Fahrrads 100 hin offen ausgeführt. Ferner ist die Öffnung 15 nach hinten, insbesondere in Fahrtrichtung gemäß einer Längsrichtung L des Fahrrads 100, offen ausgeführt. Dargestellt ist die Öffnung 15 seitlich, insbesondere gemäß einer Breitenrichtung B des Fahrrads 100, geschlossen ausgeführt.

Durch die Öffnung 15 ist die Verbindungsvorrichtung 16 insbesondere zur formschlüssigen Verbindung mit dem Fahrradständer 14 ausgeführt. Möglich ist es hierzu, dass die Öffnung 15 zu einem Einstecken, insbesondere von unten, und/oder zu einem Einschieben, insbesondere von hinten, des Fahrradständers 14 ausgeführt ist. Durch die Öffnung 15 kann der Fahrradständer 14 versenkt mit dem Fahrrad 100 verbunden werden, und somit insbesondere vorteilhaft verringerte Außenmaße, eine größere Bodenfreiheit, ein verbesserter Luftwiderstand und/oder eine verbesserte Befestigung umgesetzt werden. Möglich ist es insbesondere, dass die Verbindungsvorrichtung 16, bspw. in der Öffnung 15, eine (nicht dargestellte) Schienenvorrichtung und/oder Passung zur form- und/oder kraftschlüssigen Verbindung des Fahrradständers 14 aufweist.

Zur, insbesondere lösbaren, Verbindung des Fahrradständers 14 weist das Motorbracket 12 zwei Bohrungen 18 zur Aufnahme von (nicht dargestellten) Schrauben und/oder Bolzen auf, mit denen der Fahrradständer 14 montierbar ist. Die Bohrungen 18 münden in die Öffnung 15.

Das Fahrrad 100 weist dargestellt einen Gepäckträger 110 über dem Oberrohr 112 und einen Gepäckträger 108 über dem Hinterrad 114 auf.

Dargestellt ist die Öffnung 15, insbesondere die Verbindungsvorrichtung 16, unterhalb des Ladebereichs 106, zwischen dem Vorderrad 116 und dem Hinterrad 114, zwischen dem Steuerrohr 102 und dem Sattelrohr 104, zwischen dem Gepäckträger 110 und dem Gepäckträger 108 und/oder im Bereich des Schwerpunkts des Fahrrads 100 angeordnet. Die Öffnung 15, insbesondere die Verbindungsvorrichtung 16, ist vorzugsweise in Fahrtrichtung des Fahrrads 100 gemäß der Längsrichtung L vor dem Motor 20 und/oder vor der Kurbelachse 22 des Fahrrads 100 angeordnet.

Mit der Verbindungsvorrichtung 16, in der Öffnung 15, ist dargestellt ein Fahrradständer 14 verbunden. Bei dem Fahrradständer 14 handelt es sich dargestellt um einen zweibeinigen Kickstand.

Das Motorbracket 12 mit Verbindungsvorrichtung 16, vorzugsweise mit Fahrradständer 14 und/oder Motor 20, stellt eine Ausführung einer erfindungsgemäßen Ständervorrichtung 10 dar.

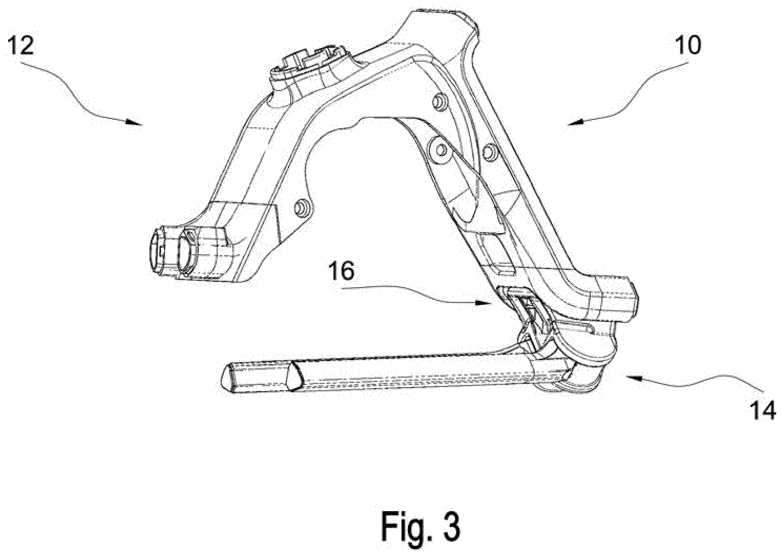

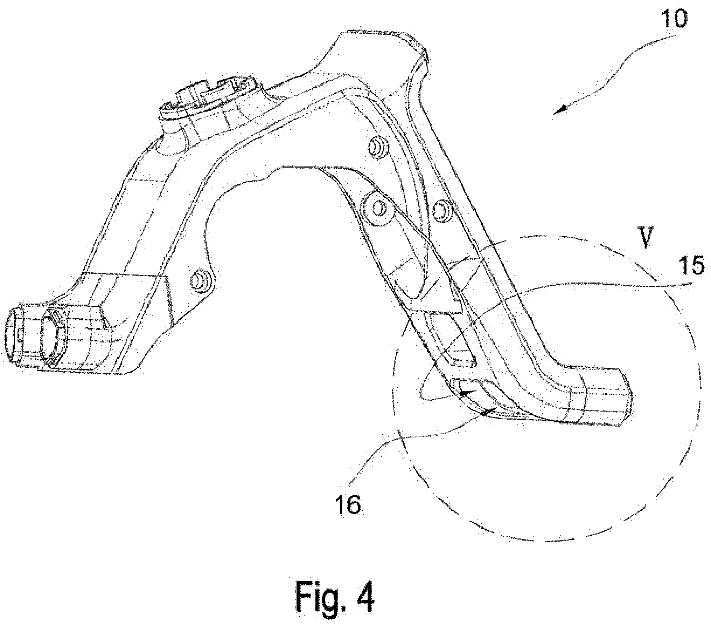

Figur 3 zeigt das Motorbracket 10 mit Fahrradständer 14 aus Fign. 1-2 ohne Motor 20. Figur 4 zeigt das Motorbracket 10 aus Fign. 1-2 ohne Motor 20 und ohne Fahrradständer 14. Diese Ausführungen der Figuren 3-4 stellen somit weitere erfindungsgemäße Ausführungen der Ständervorrichtung 10 dar.

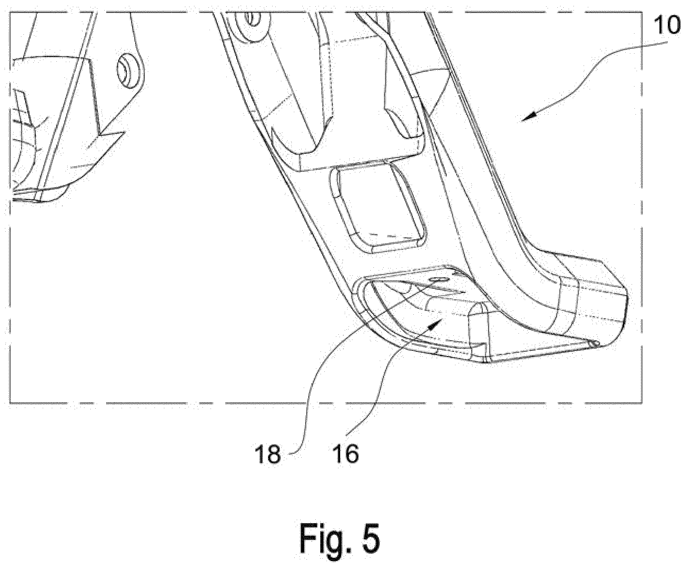

Figur 5 zeigt eine perspektivische Detailansicht auf die Verbindungsvorrichtung 16 aus Figur 4 (vgl. Detail V, Fig. 4).

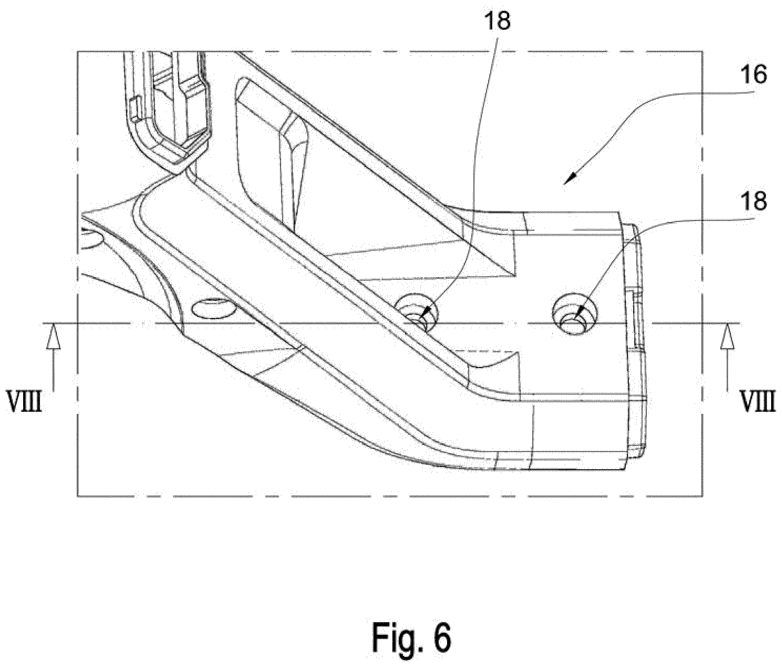

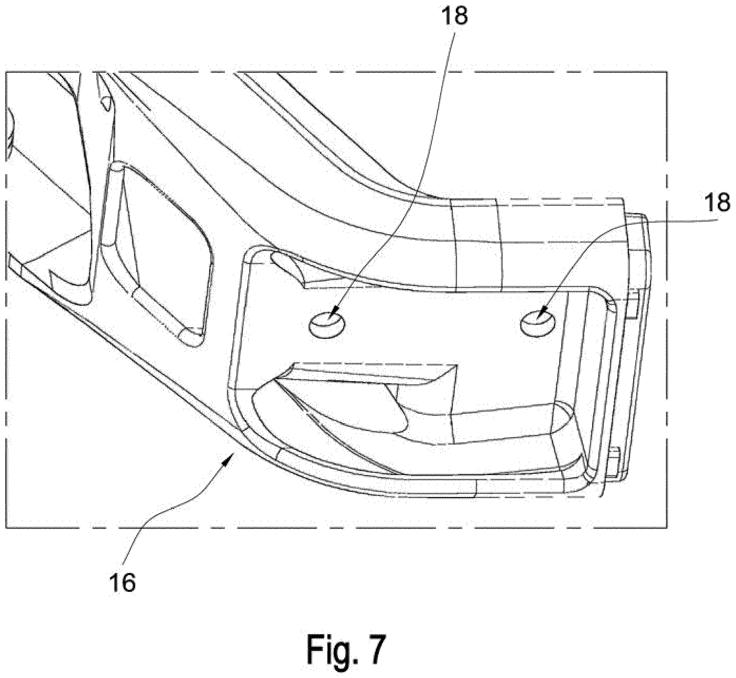

Figur 6 zeigt eine perspektivische Draufsicht und Figur 7 eine perspektivische Unteransicht auf die Verbindungsvorrichtung 16 aus Figur 4. Zu sehen sind hierbei besonders die Bohrungen 18 zur Montage des Fahrradständers 14 in der Verbindungsvorrichtung 16.

Figur 8 zeigt eine Schnittansicht des Motorbrackets 12 gemäß VIII aus Fig. 5. Die Schnittdarstellung entspricht einem Schnitt entlang eine Längsebene in Längsrichtung L des Fahrrads 100, wobei die Längsebene parallel zur Höhenrichtung H und senkrecht zur Breitenrichtung B des Fahrrads steht.

In Figur 8 sind Tiefe T der Öffnung 15 der Verbindungsvorrichtung 16 in die Erstreckung D, insbesondere die Dicke, des Motorbrackets 12 dargestellt.

## Patentansprüche

1. Ständervorrichtung (10) für ein Fahrrad (100), insbesondere ein Lastenrad, mit
einem Fahrradrahmenelement (12), und
einer, insbesondere integral, an dem Fahrradrahmenelement (12) angeordneten Verbindungsvorrichtung (16) zur Verbindung mit einem Fahrradständer (14),
wobei die Verbindungsvorrichtung (16) in das Fahrradrahmenelement (12) eingelassen ist.

2. Ständervorrichtung (10) nach Anspruch 1, **dadurch gekennzeichnet, dass** das Fahrradrahmenelement (12) eine Öffnung (15), insbesondere eine Tasche, zur zumindest teilweisen Ausbildung der Verbindungsvorrichtung (16) aufweist.

3. Ständervorrichtung (10) nach Anspruch 2, **dadurch gekennzeichnet, dass** die Öffnung (15), in Bezug auf das Fahrrad (100), nach unten und/oder seitlich und/oder in Längsrichtung offen ist.

4. Ständervorrichtung (10) nach einem der Ansprüche 1-3, **dadurch gekennzeichnet, dass** die Verbindungsvorrichtung (16) zur form- und/oder kraftschlüssigen Verbindung mit dem Fahrradständer (14) ausgeführt ist.

5. Ständervorrichtung (10) nach einem der Ansprüche 1-4, **gekennzeichnet durch** mindestens eine Bohrung (18) in dem Fahrradrahmenelement (12), insbesondere durch das Fahrradrahmenelement (12), zur schraubenden Verbindung des Fahrradständers (14) am Fahrradrahmenelement (12).

6. Ständervorrichtung (10) nach einem der Ansprüche 1-5, **dadurch gekennzeichnet, dass** es sich bei dem Fahrradrahmenelement (12) um ein Rahmenrohr handelt.

7. Ständervorrichtung (10) nach einem der Ansprüche 1-6, **dadurch gekennzeichnet, dass** das Fahrradrahmenelement (12) eine Motoraufnahme zur formschlüssigen Aufnahme eines Motors (20) aufweist.

8. Ständervorrichtung (10) nach Anspruch 7, **gekennzeichnet durch** einen mit der Motoraufnahme verbundenen Motor (20).

9. Ständervorrichtung (10) nach einem der Ansprüche 1-8, **gekennzeichnet durch** einen mit der Verbindungsvorrichtung (16) verbundenen Fahrradständer (14).

10. Ständervorrichtung (10) nach Anspruch 9, **dadurch gekennzeichnet, dass** es sich bei dem Fahrradständer (14) um einen, insbesondere zweibeinigen, Kickstand handelt.

11. Fahrrad (100), insbesondere Lastenrad, mit einer Ständervorrichtung (10) nach einem der Ansprüche 1-10.

12. Fahrrad (100) nach Anspruch 11, **dadurch gekennzeichnet, dass** die Verbindungsvorrichtung (16) in Längsrichtung des Fahrrads (100) vor einer Kurbelachse (22) und/oder vor dem Motor (20) angeordnet ist.

13. Fahrrad (100) nach Anspruch 11 oder 12, **dadurch gekennzeichnet, dass** die Verbindungsvorrichtung (16) in Längsrichtung des Fahrrads (100) hinter einem Lenker angeordnet ist.

14. Fahrrad (100) nach einem der Ansprüche 11-13, **dadurch gekennzeichnet, dass** die Verbindungsvorrichtung (16) zumindest teilweise unterhalb eines Lastenaufnahmebereichs (106), insbesondere einem innerhalb des Fahrradrahmens (101) angeordneten, Lastenaufnahmebereichs (106) angeordnet ist.

15. Fahrrad (100) nach einem der Ansprüche 11-14, **dadurch gekennzeichnet, dass** die Verbindungsvorrichtung (16) in Längsrichtung des Fahrrads zwischen einen Gepäckträger (108, 110) über einem Hinterrad (114) des Fahrrads und einem Gepäckträger (108, 110) über dem Oberrohr (112) des Fahrrads angeordnet ist.
